(19) Europäisches Patentamt
European Patent Office
Office européen des brevets

(11) **EP 4 074 528 B1**

(12) **FASCICULE DE BREVET EUROPEEN**

(45) Date de publication et mention
de la délivrance du brevet:
**24.01.2024  Bulletin 2024/04**

(21) Numéro de dépôt: **22167566.3**

(22) Date de dépôt: **11.04.2022**

(51) Classification Internationale des Brevets (IPC):
**B60H 1/00** *(2006.01)*        **B60H 1/32** *(2006.01)*

(52) Classification Coopérative des Brevets (CPC):
**B60H 1/3233; B60H 1/00371; B60H 2001/00235**

(54) **CLIMATISEUR POUR VÉHICULE, VÉHICULE COMPORTANT UN TEL CLIMATISEUR, ET MÉTHODE DE DÉBOUCHAGE D'UN CLAPET D'UN TEL CLIMATISEUR**

KLIMAANLAGE FÜR EIN FAHRZEUG, FAHRZEUG MIT EINER SOLCHEN KLIMAANLAGE, UND VERFAHREN ZUR BESEITIGUNG VON VERSTOPFUNGEN EINES VENTILS EINER SOLCHEN KLIMAANLAGE

AIR CONDITIONER FOR A VEHICLE, VEHICLE COMPRISING SAID AIR CONDITIONER, AND METHOD FOR OPENING A VALVE OF SAID AIR CONDITIONER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2021  FR 2103726**

(43) Date de publication de la demande:
**19.10.2022  Bulletin 2022/42**

(73) Titulaire: **ALSTOM Holdings
93400 Saint-Ouen-sur-Seine (FR)**

(72) Inventeur: **ALLAIN, François
17440 AYTRE (FR)**

(74) Mandataire: **Lavoix
2, place d'Estienne d'Orves
75441 Paris Cedex 09 (FR)**

(56) Documents cités:
**EP-A1- 2 189 312        CN-U- 202 938 483
JP-A- 2007 253 838      JP-A- 2020 032 775
US-A- 3 626 713          US-A- 3 799 186**

## Description

La présente invention concerne un climatiseur pour véhicule, propre à être installé sur le toit du véhicule, comprenant au moins un tuyau d'évacuation d'eau de condensation comprenant une extrémité haute connectée à un groupe principal du climatiseur et une extrémité basse équipée d'un clapet, un véhicule comportant un tel climatiseur et une méthode de débouchage du clapet d'un tel climatiseur.

Dans le domaine des climatiseurs pour véhicule, il est connu de prévoir un tuyau d'évacuation d'eau. En effet, en conditions normales d'utilisation, un climatiseur génère de l'eau de condensation qui s'accumule et doit donc être évacuée hors du climatiseur. Lorsqu'un tel climatiseur fonctionne en dépression, il est nécessaire d'éviter les entrées d'air parasite dans le climatiseur par l'intermédiaire du tuyau d'évacuation. Ainsi, il est connu d'équiper l'extrémité d'un tel tuyau d'évacuation d'un clapet, le plus souvent dénommé « bec de canard », qui permet à l'eau de condensation d'être évacuée, tout en empêchant l'air extérieur de pénétrer dans le tuyau d'évacuation. Un tel bec de canard présente l'inconvénient de se boucher lorsque le climatiseur n'est pas utilisé pendant une longue période, par exemple en hiver, et donc de nécessiter une opération de maintenance pour être débouché, après chaque arrêt longue-durée du climatiseur.

US 3 626 713 A décrit un système de climatisation pour véhicule comprenant un tuyau d'évacuation s'étendant depuis le climatiseur vers le bas et comprenant un clapet formé par un tube souple, comprimé par la pression atmosphérique et permettant un écoulement d'eau uniquement lorsqu'une quantité d'eau suffisante est présente dans le tuyau. Un tel clapet présente l'inconvénient de ne pas être fiable, car le tuyau souple risque de rester comprimé et de ne plus se déboucher après une longue période d'utilisation.

C'est à ces inconvénients qu'entend plus particulièrement remédier l'invention en proposant un nouveau climatiseur pour véhicule, propre à être installé sur le toit du véhicule, comprenant au moins un tuyau d'évacuation d'eau de condensation comprenant une extrémité haute connectée à un groupe principal du climatiseur et une extrémité basse équipée d'un clapet, le plus souvent dénommé "bec de canard", qui ne nécessite pas d'opération de maintenance pour être débouché.

À cet effet, l'invention concerne un climatiseur pour véhicule propre à être installé sur le toit du véhicule, comprenant au moins un tuyau d'évacuation d'eau de condensation comprenant une extrémité haute connectée à un groupe principal du climatiseur et une extrémité basse équipée d'un clapet. L'extrémité basse du tuyau d'évacuation est configurée pour être décalée en hauteur, vers le bas, par rapport à l'extrémité haute, depuis le climatiseur, d'une hauteur comprise entre 1 et 5 mètres lorsque le climatiseur est installé sur le toit du véhicule. Selon l'invention, le clapet comporte des lèvres et un pendule pour prévenir son bouchage et le pendule est formé d'un fil et d'une masselotte, un point d'accroche du fil du pendule est situé au-dessus du niveau des lèvres du clapet, la masselotte est située à l'extérieur du clapet et plus bas que le clapet, et le fil du pendule passe entre les lèvres du clapet.

Grâce à l'invention, le clapet, à savoir le bec de canard, est automatiquement débouché par une colonne d'eau s'accumulant dans le tuyau d'évacuation et exerçant une pression hydrostatique sur le clapet et son bouchage est évité par le pendule.

Selon des aspects avantageux, mais non obligatoires de l'invention, ce climatiseur peut incorporer une ou plusieurs des caractéristiques suivantes, prises selon toutes combinaisons techniquement admissibles :

- L'extrémité basse du tuyau d'évacuation est configurée pour être décalée en hauteur, par rapport à l'extrémité haute du tuyau d'évacuation jusqu'à un niveau situé entre le niveau du châssis du véhicule et le niveau de la surface de roulement du véhicule lorsque le climatiseur est installé sur le toit du véhicule.
- Le fil et la masselotte sont en acier inoxydable.
- Le fil a un diamètre compris entre 0,2 et 1 mm.
- La masselotte a une masse comprise entre 1 et 10 grammes.

Selon un autre aspect, l'invention concerne aussi un véhicule comportant un climatiseur tel que mentionné ci-dessus.

Ce véhicule induit les mêmes avantages que ceux mentionnés ci-dessus au sujet du climatiseur de l'invention.

Selon un autre aspect, l'invention concerne aussi une méthode de débouchage du clapet d'un climatiseur pour véhicule tel que mentionné ci-dessus, dans laquelle le débouchage du clapet est effectué par une colonne d'eau de condensation générée par le climatiseur contenue dans l'au moins un tuyau d'évacuation de l'eau de condensation, la colonne d'eau exerçant une pression hydrostatique sur les lèvres du clapet suffisante pour déboucher le clapet.

Cette méthode induit les mêmes avantages que ceux mentionnés ci-dessus au sujet du climatiseur de l'invention.

L'invention sera mieux comprise et d'autres avantages de celle-ci apparaitront plus clairement à la lumière de la description qui va suivre d'un mode de réalisation d'un climatiseur pour véhicule ; d'un véhicule comportant un tel climatiseur, et d'un méthode de débouchage d'un clapet d'un tel climatiseur, donné uniquement à titre d'exemple et faite en référence aux dessins annexés dans lesquels :

[Fig. 1] : la figure 1 est une vue en perspective d'un véhicule conforme à l'invention.

[Fig. 2] : la figure 2 est une vue du détail II de la figure 1, avec arrachement partiel.

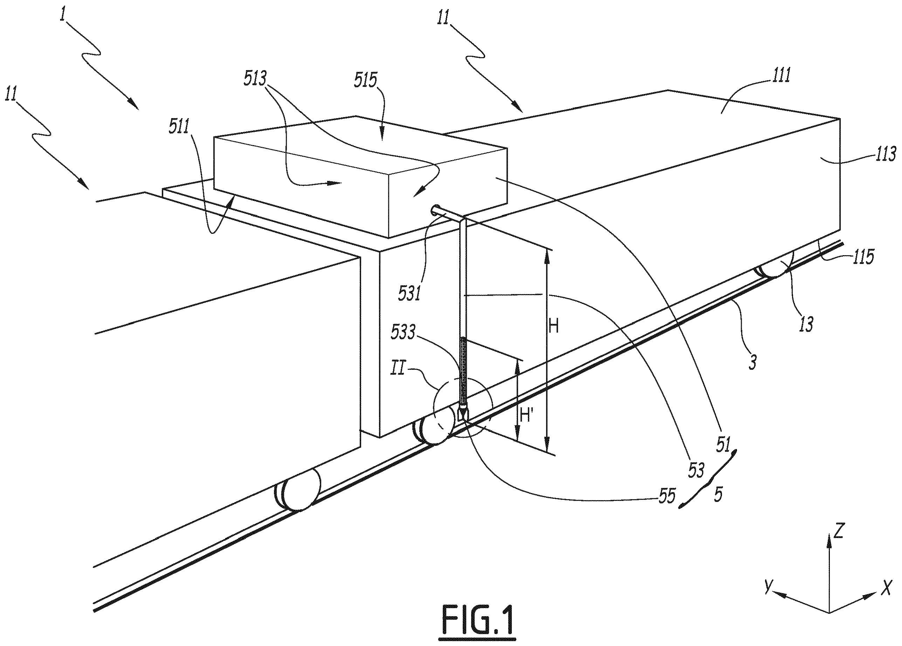

Le véhicule 1 représenté à la figure 1 est un véhicule ferroviaire, par exemple un véhicule de transport de passagers, tel qu'un train ou un tramway. On note respectivement X, Y et Z un axe longitudinal, un axe transversal et un axe vertical du véhicule 1. Les qualificatifs « haut » et « bas » s'entendent selon l'axe vertical Z, dans la configuration normale d'utilisation du véhicule 1.

Le véhicule 1 comporte plusieurs voitures 11. Chaque voiture 11 comporte un toit 111, quatre parois latérales 113 et un châssis 115. Le toit 111 et le châssis 115 sont globalement parallèles au plan formé par les axes X et Y. Des roues 13 sont montées sur le châssis 115, par exemple au moyen de bogies, et permettent au véhicule 1 de rouler sur des rails 3.

La voiture 11 représentée en entier sur la droite de la figure 1 comporte un climatiseur 5. Ce climatiseur comprend un groupe principal 51, qui définit une face inférieure 511, quatre faces latérales 513 et une face supérieure 515. La face inférieure 511 du climatiseur 51 est posée sur le toit 111 de la voiture 11, et le climatiseur est fixé au toit par des moyens de fixation non-représentés, par exemple par des boulons.

Le climatiseur 5 est un appareil électrique permettant de refroidir l'air de l'intérieur de la voiture 11, sur la base du principe de la pompe à chaleur. De l'air chaud provenant par exemple de l'extérieur de la voiture 11 est amené dans le groupe principal 51, puis refroidi à l'intérieur de ce groupe, et l'air refroidi est ensuite envoyé à l'intérieur de la voiture 11, par des gaines aérauliques non-représentées. Il fonctionne en dépression, c'est-à-dire que l'air circulant dans le groupe principal 51 est à une pression plus basse que la pression atmosphérique.

Au cours de son fonctionnement, le climatiseur 5 génère de l'eau sous forme liquide, dans le groupe principal 51, provenant de la condensation de la vapeur d'eau contenue dans l'air refroidi. Cette eau doit être évacuée hors du groupe principal 51 afin qu'elle ne puisse pas s'écouler dans les gaines aérauliques. Pour cela, le climatiseur 5 comporte un tuyau d'évacuation 53, qui permet à l'eau de condensation de s'écouler en dehors du groupe principal 51. Ce tuyau d'évacuation s'étend essentiellement de façon parallèle à l'axe Z et comporte une extrémité haute 531, qui est connectée au groupe principal à travers une de ses parois latérales, et une extrémité basse 533, qui est située au voisinage du châssis 115 de la voiture 11, plus particulièrement au niveau du châssis 115 le long de l'axe Z. Ainsi, l'extrémité basse 533 est déportée depuis le reste du climatiseur 5 vers le bas, c'est-à-dire selon l'axe Z, et vers les rails 3, et il existe une différence de hauteur H entre l'extrémité haute 531 et l'extrémité basse 533 du tuyau d'évacuation 53. L'extrémité basse du tuyau d'évacuation est donc décalée en hauteur par rapport à l'extrémité haute du tuyau. Cette hauteur, mesurée selon l'axe Z, est comprise entre 1,5 et 3 mètres, de préférence entre 2,5 et 3,0 mètres.

En pratique, cette hauteur est sensiblement égale à la hauteur de la voiture 11, c'est-à-dire à la hauteur entre le toit 111 et le châssis 115.

Le tuyau d'évacuation 53 a un diamètre compris entre 15 et 25 mm.

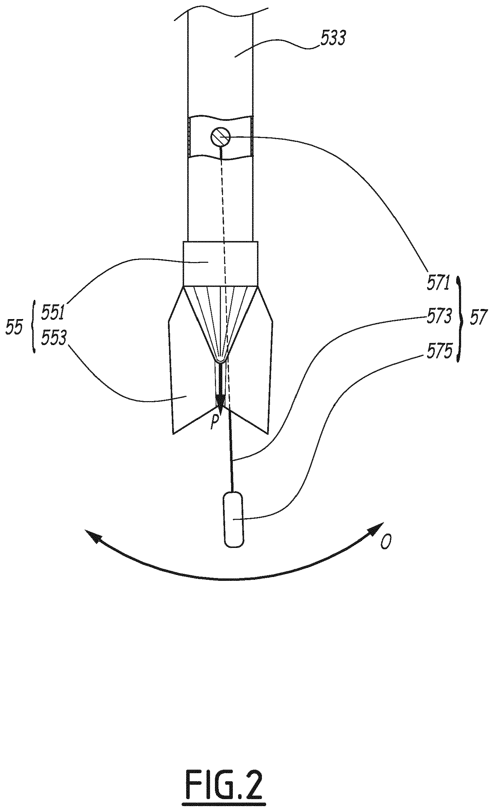

Afin de permettre l'évacuation de l'eau de condensation tout en empêchant l'entrée d'air dans le climatiseur, non-souhaitée pour conserver le groupe principal en dépression, l'extrémité basse 533 du tuyau d'évacuation est équipée d'un clapet 55, connus sous la dénomination « bec de canard » et qui est nommé ainsi dans ce qui suit. Ce bec de canard, représenté en détail à la figure 2, comprend une base 551 et deux lèvres 553. Il est traversé par un conduit, non-représenté, qui permet l'écoulement des eaux de condensation provenant du tuyau d'évacuation relié au groupe principal. Il est fabriqué en matériau polymère, de préférence en élastomère, de préférence encore en caoutchouc synthétique à base de polychloroprène. La base 551 permet de fixer le bec de canard à l'extrémité basse du tuyau d'évacuation, par exemple par vissage, encliquetage, ou soudage, ou au moyen d'un collier. Les lèvres 553 sont par défaut en contact entre elles ; elles ferment le conduit du bec de canard, empêchant ainsi l'air extérieur de pénétrer dans le bec de canard, puis dans le tuyau d'évacuation. Lorsque de l'eau de condensation arrive dans le conduit, elle peut malgré tout sortir du conduit sans être bloquée par les lèvres qui s'écartent l'une de l'autre.

Lorsque le climatiseur 5 ne fonctionne pas pendant une longue durée, par exemple en période hivernale, le bec de canard 55 peut se boucher. En effet, en l'absence d'eau de condensation s'écoulant à travers le bec de canard, les lèvres 553 peuvent s'assécher, ce qui peut provoquer leur collage. Lorsque les lèvres 553 se collent, le conduit traversant le bec de canard est bouché et, lorsque le climatiseur 5 est remis en service, par exemple en début de période estivale, l'eau de condensation générée par le groupe principal ne peut plus s'écouler entre les lèvres 553. Dans une telle situation, l'eau de condensation s'accumule dans le tuyau d'évacuation 53.

Pour éviter que l'eau de condensation ne remplisse le tuyau d'évacuation puis s'accumule dans le groupe principal jusqu'à s'écouler dans les gaines aérauliques, une méthode est mise en oeuvre pour déboucher le bec de canard, c'est-à-dire pour décoller les lèvres 553, et une méthode est mise en oeuvre pour prévenir le bouchage du bec de canard, c'est-à-dire pour empêcher les lèvres 553 de se coller.

La méthode de débouchage du bec de canard 55 se base sur la différence de hauteur H entre l'extrémité haute 531 et l'extrémité basse 533 du tuyau d'évacuation 53. Lorsque le bec de canard est bouché, l'eau de condensation provenant du groupe principal s'accumule dans le tuyau d'évacuation, pour former une colonne d'eau de hauteur H'. En s'accumulant, cette colonne d'eau exerce une pression hydrostatique P sur sa base, c'est-à-dire sur les lèvres 553, cette pression étant proportionnelle à la hauteur H'. Plus précisément, la pression hydrostatique P est égale à :

$$P = \rho \times g \times H'$$

où $\rho$ est la masse volumique de l'eau de condensation en kg.m$^3$, g est l'accélération de la pesanteur en N.kg$^{-1}$ s'appliquant au véhicule 1, H' s'exprime en mètres et P en pascal.

Ainsi, plus l'eau s'accumule dans le tuyau d'évacuation 53, plus la pression exercée sur les lèvres 553 est élevée. La masse volumique de l'eau étant constante et l'accélération de la pesanteur étant supposée constante, la pression P ne dépend que de la hauteur H' de la colonne d'eau et notamment, elle ne dépend pas du volume d'eau de la colonne. Le diamètre du tuyau d'évacuation n'a donc pas d'influence sur la pression P.

Lorsque la pression P exercée sur les lèvres 553 atteint une valeur seuil $P_s$, elle est suffisante pour que les lèvres se décollent sous l'effet de cette pression exercée par la colonne d'eau. Le bec de canard est alors débouché.

La hauteur H et les lèvres 553 du bec de canard sont configurées pour que la valeur seuil de pression $P_s$ soit atteinte pour une hauteur H' de la colonne d'eau qui est inférieure à la hauteur H. Ainsi, même lorsque le bec de canard est bouché, l'eau de condensation ne peut pas remplir le tuyau d'évacuation 53 et, donc, elle ne peut pas s'accumuler dans le groupe principal 51 ni s'écouler dans les gaines aérauliques du climatiseur 5.

Cette méthode de débouchage du bec de canard présente l'avantage d'être passive, c'est-à-dire de ne nécessiter aucune intervention humaine. En effet, c'est l'accumulation d'eau elle-même qui permet de déboucher le bec de canard grâce à la pression P, avant que cette accumulation ne puisse provoquer de dégradation sur le climatiseur 5. Ainsi, les coûts de maintenance du véhicule 1 sont réduits car aucune maintenance du bec de canard n'est nécessaire.

La méthode pour prévenir le bouchage du bec de canard utilise un pendule 57, visible à la figure 2. Le pendule 57 comporte un point d'accroche 571, qui est positionné à l'intérieur de l'extrémité basse 533 du tuyau d'évacuation 53, comme visible dans l'exemple représenté à la figure 2 au travers de l'arrachement partiel. Il comporte également un fil 573 et une masselotte 575, reliée au point d'accroche par le fil. Le fil 573 traverse le bec de canard 55 en passant par le conduit ; il passe donc entre les lèvres 553. La masselotte est suspendue au bout du fil à l'extérieur du bec de canard, plus bas que ce dernier. En pratique, le fil a une longueur comprise entre 5 et 10 cm, et le point d'accroche 571 est situé à une hauteur comprise entre 4 et 8 cm au-dessus des lèvres 553.

Le fil et la masselotte sont en matériau résistant au contact de l'humidité, par exemple en acier inoxydable. Le fil a un diamètre compris entre 0,2 et 1 mm, de préférence égal à 0,5 mm, et la masselotte a une masse comprise entre 1 et 10 grammes, de préférence égale à 5 grammes.

Lorsque le véhicule 1 se déplace sur les rails 3, la masselotte est mise en mouvement par les accélérations, décélérations et vibrations du véhicule 1. Ainsi, dès que le véhicule 1 se déplace, le pendule 57 a un mouvement d'oscillation O aléatoire. Ce mouvement d'oscillation O conduit le fil 573 à frotter contre l'intérieur des deux lèvres 553 du bec de canard, ce qui empêche les deux lèvres de se coller entre-elles, et donc le bec de canard de se boucher, même si chaque lèvre sèche à cause de l'absence d'humidité. Ainsi, même en période hivernale, le bec de canard est empêché de se boucher grâce au déplacement du véhicule 1.

Cette méthode pour prévenir le bouchage du bec de canard présente l'avantage d'être passive, c'est-à-dire de ne nécessiter aucune intervention humaine. En effet, le simple déplacement du véhicule 1 empêche ce bouchage. Ainsi, les coûts de maintenance du véhicule 1 sont réduits car aucune maintenance du bec de canard n'est nécessaire.

De plus, utiliser un fil 573 de faible diamètre permet de ne pas créer de fuite d'air entre les lèvres 553, et le bec de canard 55 reste donc hermétique à l'air.

En cas de casse du fil 573 ou de la masselotte 575, la réparation du pendule 57 est simple car il suffit de fixer un nouveau fil, auquel une nouvelle masselotte est suspendue, au point d'accroche 571.

Utiliser simultanément les deux méthodes présentées ci-dessus est avantageux pour l'exploitant du véhicule 1 car cela diminue le risque d'un bouchage du bec de canard en cas de défaillance de l'une des deux méthodes. Par exemple, en cas d'interruption prolongée du véhicule 1 en période hivernale, par exemple pour une opération de maintenance, la méthode pour prévenir le bouchage du bec de canard ne pourrait pas fonctionner. Cependant, en conditions normales d'exploitation du véhicule 1, chaque méthode est suffisante par elle-même pour permettre le bon fonctionnement d'un climatiseur pour véhicule 5 et peut être utilisée seule.

En variante non-représentée de l'invention, le véhicule 1 peut être un véhicule routier, tel d'un autocar ou un autobus, un véhicule de transport aérien, tel qu'un avion, voire encore un véhicule de transport maritime, tel qu'un paquebot.

En variante non-représentée de l'invention, le véhicule 1 comporte une seule voiture 11.

En variante non-représentée de l'invention, le climatiseur 5 est installé à l'intérieur de la voiture 11.

En variante non-représentée de l'invention, le tuyau d'évacuation 53 est installé à l'intérieur de la voiture 11, de sorte qu'il n'est pas visible depuis l'extérieur de la voiture 11.

En variante non-représentée de l'invention, le tuyau d'évacuation 53 est intégré dans une paroi latérale 113, de sorte qu'il n'est pas visible.

En variante non-représentée de l'invention, le climatiseur 5 comporte plusieurs tuyaux d'évacuation 53, chacun équipé d'un bec de canard 55.

En variante non-représentée de l'invention, l'extrémité basse 533 du tuyau d'évacuation 53 est située à une autre hauteur qu'au niveau du châssis 115, par exemple entre le châssis 115 et la surface de roulement du véhicule 1, qui est dans l'exemple définie par les rails 3.

En variante non-représentée de l'invention, l'extrémité basse 533 du tuyau d'évacuation 53 est située au-dessus du châssis 115, par exemple sur une paroi latérale 113, tout en conservant une différence de hauteur H avec l'extrémité haute suffisante pour que la hauteur H' de la colonne d'eau permettant le débouchage du bec de canard soit inférieure à H.

En variante non-représentée de l'invention, le pendule 57 est fixé par son point d'accroche 571 au conduit du bec de canard, au niveau de la base 551.

## Revendications

1. Climatiseur (5) pour véhicule (1), propre à être installé sur le toit (111) du véhicule (1), comprenant au moins un tuyau d'évacuation (53) d'eau de condensation comprenant une extrémité haute (531) connectée à un groupe principal (51) du climatiseur (5) et une extrémité basse (533) équipée d'un clapet (55), dans lequel l'extrémité basse (533) du tuyau d'évacuation (53) est configurée pour être décalée en hauteur, vers le bas, par rapport à l'extrémité haute (531), depuis le climatiseur (5), d'une hauteur (H) comprise entre 1 et 5 mètres lorsque le climatiseur (5) est installé sur le toit (111) du véhicule (1), **caractérisé en ce que** le clapet (55) comporte des lèvres (553) et un pendule (57) pour prévenir son bouchage, **en ce que** le pendule (57) est formé d'un fil (573) et d'une masselotte (575), **en ce qu'**un point d'accroche (571) du fil (573) du pendule (57) est situé au-dessus du niveau des lèvres (553) du clapet (55), **en ce que** la masselotte (575) est située à l'extérieur du clapet (55) et plus bas que le clapet (55), et **en ce que** le fil (573) du pendule (57) passe entre les lèvres (553) du clapet (55).

2. Climatiseur (5) selon la revendication 1, **caractérisé en ce que** l'extrémité basse (533) du tuyau d'évacuation (53) est configurée pour être décalée en hauteur, par rapport à l'extrémité haute (531) du tuyau d'évacuation (53) jusqu'à un niveau situé entre le niveau du châssis (115) du véhicule (1) et le niveau de la surface de roulement (3) du véhicule (1) lorsque le climatiseur (5) est installé sur le toit (111) du véhicule (1).

3. Climatiseur (5) selon l'une des revendications précédentes, **caractérisé en ce que** le fil (573) et la masselotte (575) sont en acier inoxydable.

4. Climatiseur (5) selon l'une des revendications précédentes, **caractérisé en ce que** le fil (573) a un diamètre compris entre 0,2 et 1 mm.

5. Climatiseur (5) selon l'une des revendications précédentes, **caractérisé en ce que** la masselotte (575) a une masse comprise entre 1 et 10 grammes.

6. Véhicule (1) **caractérisé en ce qu'**il comporte un climatiseur (5) conforme à l'une des revendications 1 à 5.

7. Méthode de débouchage du clapet (55) d'un climatiseur (5) pour véhicule (1) conforme à l'une des revendications 1 à 5, **caractérisée en ce que** le débouchage du clapet (55) est effectué par une colonne d'eau de condensation générée par le climatiseur (5) contenue dans l'au moins un tuyau d'évacuation (53) de l'eau de condensation, la colonne d'eau exerçant une pression hydrostatique (P) sur les lèvres (553) du clapet (55), suffisante pour déboucher le clapet (55).

## Patentansprüche

1. Klimaanlage (5) für ein Fahrzeug (1), die geeignet ist, auf dem Dach (111) des Fahrzeugs (1) installiert zu werden,

   umfassend mindestens ein Ablaufrohr (53) umfassend ein oberes Ende (531), das mit einer Haupteinheit (51) der Klimaanlage verbunden ist
   und ein unteres Ende (533), das mit einem Ventil (55) ausgestattet ist, wobei das untere Ende (533) des Ablaufrohrs (53) konfiguriert ist, um in der Höhe von der Klimaanlage (5) aus in Bezug auf das obere Ende (531) um eine Höhe (H) zwischen 1 und 5 Meter nach unten versetzt zu sein, wenn die Klimaanlage (5) auf dem Dach (111) des Fahrzeugs (1) installiert ist,
   **dadurch gekennzeichnet, dass** die Klappe (55) Lippen (553) und ein Pendel (57) aufweist, um seine Verstopfung zu verhindern, dass das Pendel (57) aus einem Draht (573) und einem Gewicht (575) gebildet ist, dass ein Einhängepunkt (571) des Drahts (573) des Pendels (57) oberhalb der Höhe der Lippen (553) der Klappe (55) ist, dass das Gewicht (575) außerhalb der Klappe (55) und tiefer als die Klappe (55) ist, und dass der Draht (573) des Pendels (57) zwischen den Lippen (553) der Klappe (55) verläuft.

2. Klimaanlage (5) nach Anspruch 1, **dadurch gekennzeichnet, dass** das untere Ende (533) des Ablaufrohrs (53) konfiguriert ist, um in Bezug auf das obere Ende (531) des Ablaufrohrs (53) bis zu einer Höhe zwischen der Höhe des Rahmens (115) des Fahrzeugs (1) und der Höhe der Fahrbahnoberfläche (3) des Fahrzeugs (1) in der Höhe versetzt ist, wenn die Klimaanlage (5) auf dem Dach (111) des Fahrzeugs (1) installiert ist.

3. Klimaanlage (5) nach einem der vorherigen Ansprüche, **dadurch gekennzeichnet, dass** der Draht (573) und das Gewicht (575) aus Edelstahl sind.

4. Klimaanlage (5) nach einem der vorherigen Ansprüche, **dadurch gekennzeichnet, dass** der Draht (573) einen Durchmesser zwischen 0,2 und 1 mm aufweist.

5. Klimaanlage (5) nach einem der vorherigen Ansprüche, **dadurch gekennzeichnet, dass** das Gewicht (575) eine Masse zwischen 1 und 10 Gramm aufweist.

6. Fahrzeug (1), **dadurch gekennzeichnet, dass** es eine Klimaanlage (5) nach einem der Ansprüche 1 bis 5 umfasst.

7. Verstopfungsaufhebungsverfahren der Klappe (55) einer Klimaanlage (5) für ein Fahrzeug (1) nach einem der Ansprüche 1 bis 5, **dadurch gekennzeichnet, dass** die Verstopfungsaufhebung der Klappe (55) durch eine Säule von durch die Klimaanlage (5) erzeugtem Kondenswasser bewirkt wird, das in dem mindestens einen Ablaufrohr (53) für das Kondenswasser enthalten ist, wobei die Wassersäule einen hydrostatischen Druck (P) auf die Lippen (553) des Ventils ausübt, der ausreichend ist, um eine Verstopfung des Ventils (55) aufzuheben.

**Claims**

1. An air conditioner (5) for a vehicle (1), suitable for installation on the roof (111) of the vehicle (1),

   comprising at least one condensation water discharge pipe (53)
   comprising a top end (531) connected to a main unit (51) of the air conditioner
   and a lower end (533) provided with a valve (55), wherein the lower end (533) of the discharge pipe (53) is configured to be offset from the air conditioner (5) by a height (H) of between 1 and 5 metres when the air conditioner (5) is installed on the roof (111) of the vehicle (1), **characterised in that** the valve (55) comprises lips (553) and a pendulum (57) to prevent its blockage, **in that** the pendulum (57) is formed by a wire (573) and a flyweight (575), **in that** a point of attachment (571) of the wire (573) of the pendulum (57) is situated above the level of the lips (553) of the flap (55), **in that** the weight (575) is located outside the flap valve (55) and lower than the flap valve (55), and **in that** the wire (573) of the pendulum (57) passes between the lips (553) of the flap valve (55).

2. An air conditioner (5) as claimed in claim 1, **characterised in that** the lower end (533) of the discharge pipe (53) is configured to be offset in height relative to the upper end (531) of the discharge pipe (53) to a level between the level of the chassis (115) of the vehicle (1) and the level of the running surface (3) of the vehicle (1) when the air conditioner (5) is installed on the roof (111) of the vehicle (1).

3. An air conditioner (5) according to one of the preceding claims, **characterised in that** the wire (573) and the flyweight (575) are made of stainless steel.

4. An air conditioner (5) according to one of the preceding claims, **characterised in that** the wire (573) has a diameter of between 0.2 and 1 mm.

5. An air conditioner (5) according to one of the preceding claims, **characterised in that** the weight (575) has a mass of between 1 and 10 grams.

6. Vehicle (1) **characterised in that** it comprises an air conditioning unit (5) in accordance with one of claims 1 to 5.

7. Method for unblocking the valve (55) of an air conditioner (5) for a vehicle (1) according to one of claims 1 to 5, **characterised in that** the valve (55) is unblocked by a column of condensation water generated by the air conditioner (5) contained in at least one condensation water discharge pipe (53), the column of water exerting a hydrostatic pressure (P) on the lips (553) of the valve sufficient to unblock the valve (55).

FIG.1

EP 4 074 528 B1

FIG.2

**EP 4 074 528 B1**

## RÉFÉRENCES CITÉES DANS LA DESCRIPTION

**Documents brevets cités dans la description**

- US 3626713 A